# EUROPEAN PATENT APPLICATION

(11) **EP 4 819 434 A1**
(43) Date of publication of application: **07.10.2026**
(21) Application number: 24910473.8
(22) Date of filing: 26.11.2024
(51) Int. Cl.: H02J 7/00

(54) **CHARGING SYSTEM AND CHARGING METHOD**

(30) Priority: 27.12.2023 CN 202311827496
(71) Applicant: Huawei Digital Power Technologies Co., Ltd., Shenzhen, Guangdong 518043 (CN)
(72) Inventor: ZHENG, Yonghong, Shenzhen, Guangdong 518043 (CN)
(74) Representative: Isarpatent
(86) International application number: PCT/CN2024/134575
(87) International publication number: WO 2025/139539

(57) **Abstract**

Embodiments of this application provide a charging system and a charging method. The charging system includes a plurality of charging devices, a plurality of energy storage devices, and at least one switch module. Each charging device includes an alternating current-to-direct current AC-DC conversion apparatus, a direct current bus, and a direct current-to-direct current DC-DC conversion apparatus. The AC-DC conversion apparatus is configured to: convert an alternating current into a direct current and output the direct current to the direct current bus, and the DC-DC conversion apparatus is configured to: obtain a direct current from the direct current bus, and output the direct current to a load after power conversion. Each energy storage device is connected to the direct current bus of each charging device through the at least one switch module, for power transmission between each energy storage device and the direct current bus of each charging device. In embodiments of this application, the energy storage device in the charging system can flexibly allocate power to the plurality of charging devices, to improve utilization of energy storage resources in the charging system.

## Description

This application claims priority to Chinese Patent Application No. 202311827496.5, filed with the China National Intellectual Property Administration on December 27, 2023 and entitled "CHARGING SYSTEM AND CHARGING METHOD", which is incorporated herein by reference in its entirety.

### TECHNICAL FIELD

This application relates to the field of charging, and more specifically, to a charging system and a charging method.

### BACKGROUND

As a basic service facility for electric vehicles, a charging station can provide electrical energy required for running of various electric vehicles. A charging device in the charging station obtains electrical energy from a power grid, to charge the electric vehicle. With increasing popularity of electric vehicles, the charging device needs to obtain increasing electrical energy from the power grid, resulting in an increase in load pressure on the power grid.

Currently, to relieve pressure on the power grid, energy storage devices start to be added to some charging stations, and are used to supply electrical energy to charging devices, to reduce electrical energy obtained by the charging devices from the power grid. In addition, to meet charging requirements of more electric vehicles, more charging devices need to be disposed in the charging station. However, in current actual application, the energy storage device in the charging station cannot flexibly allocate power to a plurality of charging devices, resulting in low utilization of energy storage resources in the charging station.

### SUMMARY

This application provides a charging system and a charging method, so that energy storage devices in the charging system can flexibly allocate power to a plurality of charging devices, to improve utilization of energy storage resources in the charging system.

According to a first aspect, a charging system is provided. The charging device includes a plurality of charging devices, a plurality of energy storage devices, and at least one switch module. Each charging device includes an alternating current-to-direct current AC-DC conversion apparatus, a direct current bus, and a direct current-to-direct current DC-DC conversion apparatus. The AC-DC conversion apparatus is configured to: convert an alternating current into a direct current and output the direct current to the direct current bus, and the DC-DC conversion apparatus is configured to: obtain a direct current from the direct current bus, and output the direct current to a load after power conversion. Each energy storage device is connected to the direct current bus of each charging device through the at least one switch module. The at least one switch module is configured to connect or disconnect each energy storage device and the direct current bus of each charging device, for power transmission between each energy storage device and the direct current bus of each charging device.

In the foregoing technical solution, the plurality of energy storage devices in the charging system are connected to the direct current bus of each charging device through the at least one switch module, for power transmission between any energy storage device in the charging system and a direct current bus of any charging device. Further, in actual application, the energy storage devices in the charging system can flexibly allocate power to the plurality of charging devices in the charging system, so that the energy storage devices share power between the plurality of charging devices. This can not only increase output power of each charging device in the charging system, to meet required charging power of different loads, but also improve utilization of energy storage resources in the charging system and SOC balance between the energy storage devices.

With reference to the first aspect, in some implementations of the first aspect, the at least one switch module includes at least one first switch module and a plurality of second switch modules. Each energy storage device is connected to one end of each second switch module through a same first switch module, and the other ends of the plurality of second switch modules are connected to the direct current buses of the plurality of charging devices in one-to-one correspondence. Alternatively, each energy storage device is connected to one end of each of the plurality of first switch modules, the other ends of the plurality of first switch modules are connected to ends of the plurality of second switch modules in one-to-one correspondence, and the other ends of the plurality of second switch modules are connected to the direct current buses of the plurality of charging devices in one-to-one correspondence.

In the foregoing technical solution, a plurality of switch modules in the charging system are configured as two-stage switch modules including the at least one first switch module and the plurality of second switch modules. The first switch module controls whether the energy storage devices are connected to the charging system, to transmit power to a direct current bus of a specified charging device, and the second switch module controls an energy storage device that has been connected to the charging system to transmit power to a direct current bus of a specified charging device. In this way, any energy storage device in the charging system can transmit power to a direct current bus of any charging device, so that the energy storage devices in the charging system flexibly allocate power to the plurality of charging devices.

In addition, because the plurality of second switch modules are connected to the direct current buses of the plurality of charging devices in one-to-one correspondence, the plurality of second switch modules each can be disposed in a correspondingly connected charging devices, so that a connection between each second switch module and the direct current bus of the corresponding charging device better meets a safety regulation requirement of the corresponding charging device, to improve overall safety of the charging system.

With reference to the first aspect, in some implementations of the first aspect, when one charging device charges the load, in response to output power of the charging device being less than required charging power of the load, the at least one first switch module is configured to connect the plurality of energy storage devices and a second switch module corresponding to a direct current bus of the charging device, and the second switch module corresponding to the direct current bus of the charging device is configured to connect the direct current bus of the charging device and the energy storage devices that are connected through the at least one first switch module.

In the foregoing technical solution, when output power of any charging device in the charging system does not meet the required charging power of the load, the first switch module and the second switch module connect the plurality of energy storage devices in the charging system and a direct current bus of the charging device, so that the plurality of energy storage devices can transmit power to the direct current bus of the charging device, to increase the output power of the charging device, and help meet the required charging power of the load.

With reference to the first aspect, in some implementations of the first aspect, that the at least one first switch module is configured to connect the plurality of energy storage devices and the second switch module corresponding to the direct current bus of the charging device includes: In response to a difference between states of charge SOCs of two energy storage devices being greater than a preset SOC difference, the at least one first switch module is configured to connect an energy storage device with a higher SOC in the two energy storage devices and the second switch module corresponding to the direct current bus of the charging device; or in response to a difference between states of charge SOCs of two energy storage devices being less than or equal to the preset SOC difference, the at least one first switch module is configured to close a connections between each of the two energy storage devices and the second switch module corresponding to the direct current bus of the charging device.

It may be understood that, that the difference between the SOCs of the two energy storage devices is greater than the preset SOC difference may mean that remaining battery levels of the two energy storage devices differ greatly. That the difference between the SOCs of the two energy storage devices is less than or equal to the preset SOC difference may mean that remaining battery levels of the two energy storage devices are equal or differ slightly.

In the foregoing technical solution, when the remaining battery levels of the two energy storage devices in the charging system differ greatly, the disposed first switch module and second switch module connect an energy storage device with a higher SOC in the two energy storage devices and the direct current bus of the charging device, so that the energy storage device with a higher remaining battery level in the two energy storage devices preferentially transmits power to the charging device. Further, this can not only increase the output power of the charging device, to meet the required charging power of the load, but also reduce a difference between the remaining battery levels of the two energy storage devices, to help improve SOC balance between the two energy storage devices.

In addition, when the remaining battery levels of the two energy storage devices in the charging system differ slightly, the disposed first switch module and second switch module connect each of the two energy storage devices and the direct current bus of the charging device, so that both the two energy storage devices transmit power to the charging device. Further, this can not only increase the output power of the charging device, to meet the required charging power of the load, but also ensure that the remaining battery levels of the two energy storage devices continue to maintain equal or differ slightly, to help improve SOC balance between the two energy storage devices.

With reference to the first aspect, in some implementations of the first aspect, when the charging device and the other charging device each charge the load, in response to the output power of the charging device and output power of the other charging device being less than the required charging power of the load, the at least one first switch module is configured to: connect a part of energy storage devices in the plurality of energy storage devices and the second switch module corresponding to the direct current bus of the charging device, and connect the other part of energy storage devices and a second switch module corresponding to a direct current bus of the other charging device.

In the foregoing technical solution, when any two charging devices in the charging system each charge the load, the disposed first switch module connects a part of energy storage devices in the plurality of energy storage devices and a direct current bus of one charging device, and connects the other part of energy storage devices and a direct current bus of the other charging device, so that any one of the plurality of energy storage devices transmits power to a direct current bus of only one charging device. This can not only increase the output power of the two charging devices, to meet a charging power requirement of the load, but also avoid a circulating current that is generated in the charging system because a same energy storage device in the plurality of energy storage devices simultaneously transmits power to the direct current buses of the two charging devices, to improve overall running safety of the charging system.

With reference to the first aspect, in some implementations of the first aspect, when a difference between the output power of the charging device and the required charging power of the load is greater than a difference between the output power of the other charging device and the required charging power of the load, an average value of SOCs of the part of energy storage devices is greater than an average value of SOCs of the other part of energy storage devices.

It may be understood that when the difference between the output power of the charging device and the required charging power of the load is greater than the difference between the output power of the other charging device and the required charging power of the load, to meet the required charging power of charging, output power required by the charging device is greater than output power required by the charging device.

In the foregoing technical solution, when the output power required by the charging device is greater than the output power required by the other charging device to meet the required charging power of the load, a part of energy storage devices with higher remaining battery levels are selected from the plurality of energy storage devices in the charging system to transmit power to the direct current bus of the charging device, and the other part of energy storage devices with lower remaining battery levels are selected to transmit power to the direct current bus of the other charging device. This not only helps both the output power of the two charging devices meet the required charging power of the load, but also helps improve SOC balance between the plurality of energy storage devices.

According to a second aspect, a charging method is provided. The charging method includes: when a charging device in a charging system charges a load, obtaining required charging power of the load; and in response to output power of the charging device being less than the required charging power of the load, controlling at least one switch module in the charging system to connect a plurality of energy storage devices in the charging system and a direct current bus of the charging device, where the direct current bus of the charging device is configured to aggregate direct currents output by alternating current-to-direct current AC-DC conversion apparatuses in the charging device, and output an aggregated direct current to the load through a direct current-to-direct current DC-DC conversion apparatus.

In the foregoing technical solution, the plurality of energy storage devices in the charging system are connected to a direct current bus of any charging device in the charging system through the at least one switch module. Further, when output power of the charging device does not meet the required charging power of the load, the at least one switch module can be controlled to connect the plurality of energy storage devices and the direct current bus of the charging device, so that power of the plurality of energy storage devices can be shared with the direct current bus of the charging device, to increase the output power of the charging device, and help meet the required charging power of the load.

With reference to the second aspect, in some implementations of the second aspect, controlling the at least one switch module in the charging system to connect the plurality of energy storage devices and the direct current bus of the charging device includes: controlling at least one first switch module to connect the plurality of energy storage devices and a second switch module corresponding to the direct current bus of the charging device, and controlling the second switch module corresponding to the direct current bus of the charging device to connect the direct current bus of the charging device and the energy storage devices that are connected through the at least one first switch module, where the at least one first switch module and the second switch module corresponding to the direct current bus of the charging device belong to the at least one switch module.

With reference to the second aspect, in some implementations of the second aspect, controlling the at least one first switch module to connect the plurality of energy storage devices and the second switch module corresponding to the direct current bus of the charging device includes: in response to a difference between states of charge SOCs of two of the plurality of energy storage devices being greater than a preset SOC difference, controlling the at least one first switch module to connect an energy storage device with a higher SOC in the two energy storage devices and the second switch module corresponding to the direct current bus of the charging device; or in response to a difference between states of charge SOCs of two energy storage devices being less than or equal to the preset SOC difference, controlling the at least one first switch module to connect each of the two energy storage devices and the second switch module corresponding to the direct current bus of the charging device.

With reference to the second aspect, in some implementations of the second aspect, the charging method further includes: when the charging device and the other charging device in the charging system each charge the load, in response to the output power of the charging device and an output power of the other charging device being less than an output power of the load, controlling the at least one first switch module to connect a part of energy storage devices in the plurality of energy storage devices and the second switch module corresponding to the direct current bus of the charging device, and connect the other part of energy storage devices and a second switch module corresponding to a direct current bus of the other charging device.

With reference to the second aspect, in some implementations of the second aspect, when a difference between the output power of the charging device and the required charging power of the load is greater than a difference between the output power of the other charging device and the required charging power of the load, an average value of SOCs of the part of energy storage devices is greater than an average value of SOCs of the other part of energy storage devices.

For beneficial effect that is not described in detail in the second aspect, refer to the beneficial effect in the first aspect. Details are not described herein again.

### BRIEF DESCRIPTION OF DRAWINGS

FIG. 1 is a diagram of a structure of a charging system according to an embodiment of this application;
FIG. 2 is a diagram of a connection structure of the charging system shown in FIG. 1;
FIG. 3 to FIG. 8 each are a diagram of a structure of a charging system according to an embodiment of this application; and
FIG. 9 and FIG. 10 each are a schematic flowchart of a charging method according to an embodiment of this application.

### DESCRIPTION OF EMBODIMENTS

For ease of understanding of embodiments of this application, the following descriptions are first provided before embodiments of this application are described.

In descriptions of embodiments of this application, "connection" may be electrical connection, and the electrical connection may be understood as a manner of direct electrical connection or indirect electrical connection between two electrical elements to implement signal transmission. For example, that A is connected to B may be understood as: A is directly electrically connected to B, or may be understood as: A is indirectly electrically connected to B through one or more other electrical elements.

The terms "first" and "second" in embodiments of this application are merely intended for description, and shall not be understood as an indication or implication of relative importance or implicit indication of a quantity of indicated technical features. Therefore, a feature limited by "first" and "second" may wisely or implicitly include one or more features. In addition, in the descriptions of embodiments of this application, "a plurality of" means two or more, and "at least one" and "one or more" mean one, two, or more.

In the descriptions of embodiments of this application, unless otherwise specified, "and/or" describes only an association relationship for describing associated objects and represents that three relationships may exist. For example, A and/or B may represent the following three cases: Only A exists, both A and B exist, and only B exists.

The following first briefly describes technical terms in embodiments of this application, to facilitate subsequent understanding of embodiments of this application.

State of charge (state of charge, SOC): mainly reflects a remaining battery level of an energy storage device. A value of the state of charge is a ratio of the remaining battery level to a rated battery level, and is usually expressed as a percentage. That the SOC is 0 may be understood as: the remaining battery level of the energy storage device is 0, and that the SOC is 100% may be understood as: the energy storage device is in a fully charged state.

A peak electricity price and a valley electricity price: may mean an electricity price system that charges electricity separately based on peak power consumption and valley power consumption. The peak power consumption is usually power consumption when power-consuming units are centralized and power supply is insufficient, for example, power consumption in the daytime. A peak power consumption time period may be referred to as a peak time period, and an electricity price during the peak power consumption may be referred to as the peak electricity price. The valley power consumption is usually power consumption when power consumption is low and power supply is sufficient, for example, power consumption at night. A valley power consumption time period may be referred to as a valley time period, and an electricity price during the valley power consumption may be referred to as the valley electricity price. A power consumption time period other than the peak power consumption time period and the valley power consumption time period is a normal time period that may also be referred to as a normal period, and an electricity price in the normal period is referred to as a normal electricity price. A billing standard of the peak electricity price is usually the highest, a billing standard of the normal electricity price is the second highest, and a billing standard of the valley electricity price is the lowest.

The following describes technical solutions of this application with reference to accompanying drawings.

First, for ease of understanding technical solutions provided in embodiments of this application, the following describes an application scenario to which embodiments of this application are applicable.

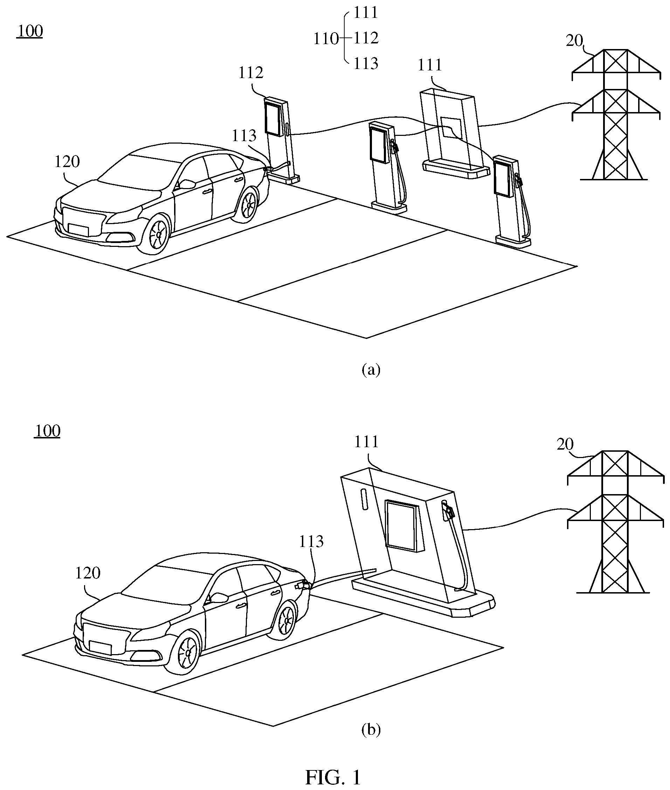

FIG. 1 is a diagram of a structure of an example of a charging system 100 according to an embodiment of this application.

With reference to (a) and (b) in FIG. 1, the charging system 100 may include a charging device 110 and an electric vehicle 120. The charging device 110 may be configured to: receive an alternating current output by an external power grid 20, convert the alternating current into a stable direct current, and then transmit the stable direct current to the electric vehicle 120, to charge the electric vehicle 120. Alternatively, the electric vehicle 120 may reversely output electrical energy to the external power grid 200 through the charging device 110.

It may be understood that, in this embodiment of this application, the alternating current output by the external power grid 20 may also be referred to as mains.

In some embodiments, as shown in (a) in FIG. 1, the charging device 110 may include a charging power unit 111, at least one charging terminal 112, and at least one charging connector 113. The charging power unit 111 is connected to the at least one charging terminal 112, the at least one charging terminal 112 is connected to the at least one charging connector 113, and each charging connector 113 is configured to connect to the electric vehicle 120. During specific implementation, one charging terminal 112 may be connected to one or more charging connectors 113.

The charging power unit 111 may include a plurality of power conversion apparatuses. The plurality of power conversion apparatuses may convert an alternating current that is from the external power grid 20 into a stable direct current, and then transmit the stable direct current to the charging terminal 112. The charging terminal 112 may transmit the stable direct current to the electric vehicle 120 through the connected charging connector 113, to charge the electric vehicle 120.

The charging terminal 112 may include a housing, a human-machine interaction interface, a charging control unit, a metering and billing unit, and the like, and is configured to perform information exchange, energy transmission, metering and billing, and the like with the electric vehicle 120.

The electric vehicle 120 may be a transportation vehicle driven by electrical energy to run. The electric vehicle 120 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. (1), the charging device 110 may be an integrated charging pile. Specifically, in the charging device 110, a human-machine interaction interface, a charging control unit, a metering and billing unit, and the like may be directly disposed in a charging power unit 111, so that the charging device 110 may include only the charging power unit 111 and at least one charging connector 113 connected to the charging power unit 111, but does not include the charging terminal 112. A plurality of power conversion apparatuses in the charging power unit 111 may convert an alternating current from the external power grid 20 into a stable direct current, and then directly transmit the stable direct current to the electric vehicle 120 through the charging connector 113.

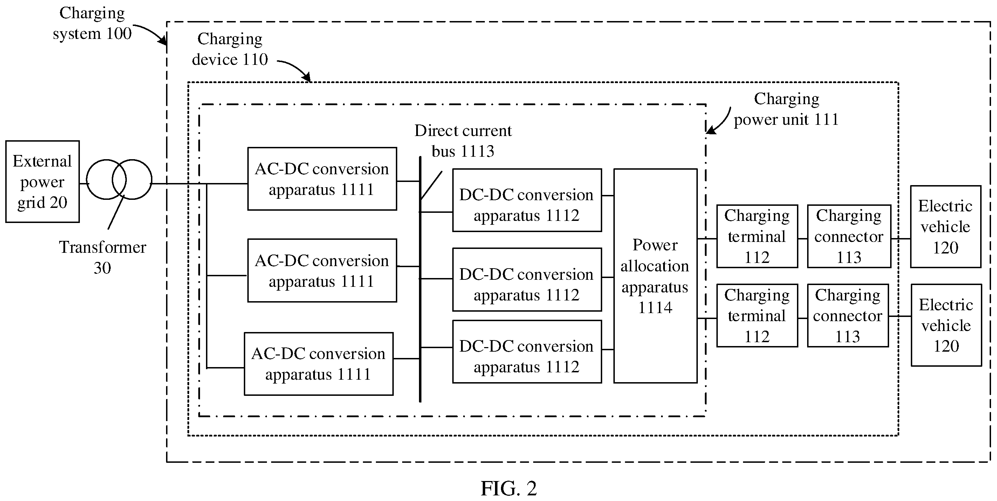

FIG. 2 shows an example of a diagram of a connection structure of the charging system 100 shown in (a) in FIG. 1.

Refer to FIG. 2. The charging power unit 111 includes a plurality of AC-DC conversion apparatuses 1111, a plurality of DC-DC conversion apparatuses 1112, a direct current bus 1113, and a power allocation apparatus 1114. The plurality of AC-DC conversion apparatuses 1111 are connected in parallel between the external power grid 20 and the direct current bus 1113. Input ends of the plurality of DC-DC conversion apparatuses 1112 are connected to the direct current bus 1113, and output ends of the plurality of DC-DC conversion apparatuses 1112 are connected to an input end of the power allocation apparatus 1114. An output end of the power allocation apparatus 1114 is connected to the charging connector 113 through the charging terminal 112.

The plurality of AC-DC conversion apparatuses 1111 are configured to: receive an alternating current from the external power grid 20, convert the alternating current into direct currents, and output the direct currents to the direct current bus 1113. That is, the direct current bus 1113 is configured to aggregate the direct currents output by the plurality of AC-DC conversion apparatuses 1111. During specific implementation, input ends of the plurality of AC-DC conversion apparatuses 1111 may be connected to the external power grid 20 through a transformer 30. The transformer 30 is configured to reduce a voltage of a high-voltage alternating current from the external power grid 20, and output a low-voltage alternating current obtained after voltage reduction to the plurality of AC-DC conversion apparatuses 1111. For example, the transformer 30 may reduce a 10 KV alternating current from the external power grid 20 into a 380 V alternating current, and then output the 380 V alternating current to the plurality of AC-DC conversion apparatuses 1111.

The plurality of DC-DC conversion apparatuses 1112 are configured to: obtain direct currents from the direct current bus 1113, convert the obtained direct currents into direct currents applicable to the electric vehicle 120, and transmit the direct currents to the power allocation apparatus 1114.

The power allocation apparatus 1114 is configured to: dynamically allocate, based on charging power actually required by the electric vehicle 120, the direct currents output by the plurality of DC-DC conversion apparatuses 1112, and transmit allocated charging power to the electric vehicle 120 through the charging connector 113 connected to the charging terminal 112, to charge the electric vehicle 120.

As described in Background, to relieve load pressure on the external power grid 20, an energy storage device starts to be added to the charging system 100, and the energy storage device supplies electrical energy to the charging device 110, to reduce electrical energy obtained by the charging device 110 from the external power grid 200. In addition, to meet charging requirements of more electric vehicles 120, a quantity of charging devices 110 disposed in the charging system 100 also increases accordingly.

However, in current actual application, most energy storage devices in the charging system 100 are directly connected to direct current buses 1113 of fixed charging devices 110. As a result, the energy storage devices in the charging system 100 can share power only with the connected charging devices 110, and cannot share power with another unconnected charging device 110, and utilization of energy storage resources in the charging system 100 is low.

In addition, randomness of charging and different required charging power of different electric vehicles 120 easily cause imbalanced charging loads of different charging devices 110 in the charging system 100. Correspondingly, battery levels of energy storage devices connected to the different charging devices 110 differ greatly. Consequently, SOC balance between the energy storage devices in the charging system 100 is poor. For example, an SOC of an energy storage device connected to a charging device 110 is 20%, and an SOC of an energy storage device connected to another charging device 110 is 70%. If the energy storage devices in the charging system 100 are in an SOC imbalance state for a long time period, a problem of short service lives of the energy storage devices and low utilization of energy storage resources in the charging system 100 is likely to occur.

Based on the foregoing content, embodiments of this application provide a charging system and a charging method, so that energy storage devices in the charging system can flexibly allocate power to the plurality of charging devices, to improve utilization of energy storage resources in the charging system.

The following separately describes in detail the charging system and the charging method provided in embodiments of this application with reference to the accompanying drawings. It should be noted that, for ease of understanding, in the accompanying drawings provided in embodiments of this application, a solid connection line represents a power transmission line, and a dashed connection line represents a signal transmission line.

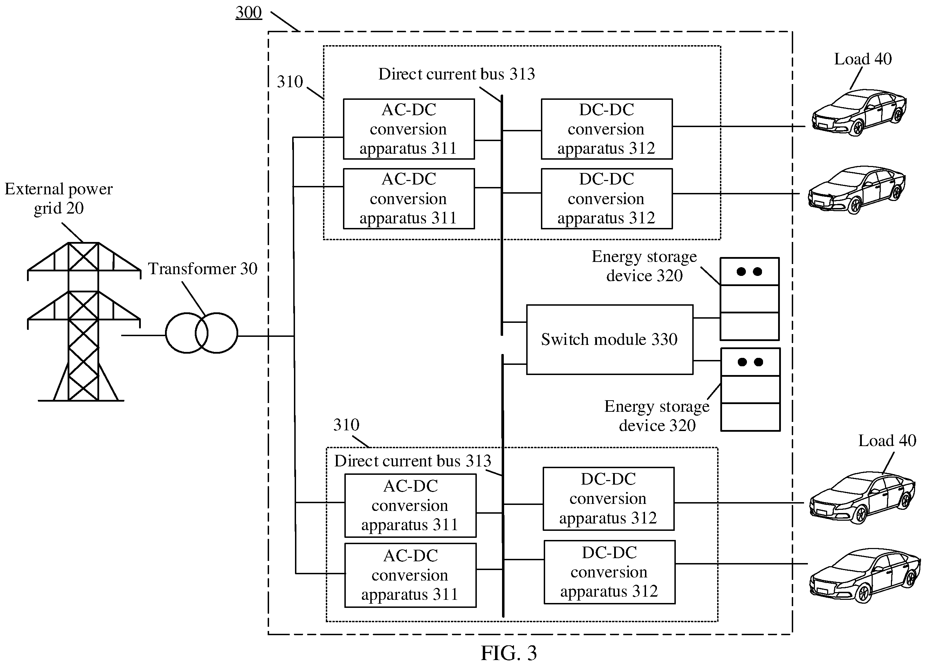

FIG. 3 is a diagram of a structure of a charging system according to an embodiment of this application.

Refer to FIG. 3. The charging system 300 may include a plurality of charging devices 310, a plurality of energy storage devices 320, and at least one switch module 330.

Each charging device 310 includes a plurality of AC-DC conversion apparatuses 311, a plurality of DC-DC conversion apparatuses 312, and a direct current bus 313. The plurality of AC-DC conversion apparatuses 311 are configured to: receive an alternating current from an external power grid, for example, receive an alternating current from an external power grid 20 through the transformer 30 shown in FIG. 2, convert the alternating current into direct currents, and then output the direct currents to the direct current bus 313. That is, the direct current bus 313 may aggregate the direct currents output by the plurality of AC-DC conversion apparatuses 311. The plurality of DC-DC conversion apparatuses 312 are configured to: obtain direct currents from the direct current bus 313, perform power conversion on the obtained direct currents, and then output the direct currents to a load 40.

It may be understood that the charging device 310 may be the split charging pile or the integrated charging pile shown in FIG. 1. For specific descriptions of the charging device 310, refer to related descriptions of the embodiments shown in FIG. 1 and FIG. 2. Details are not described herein again. It should be noted that, for ease of description and understanding, this embodiment of this application is described by using an example in which the charging device 310 is the split charging pile shown in (a) in FIG. 1.

It may be further understood that, in this embodiment of this application, the load 40 may be the electric vehicle 120 shown in FIG. 1, or may be another device that uses a direct current power supply as a power supply, for example, an industrial transportation appliance, an agricultural transportation appliance, an airplane, and a train. For ease of description and understanding, in this embodiment of this application, an example in which the load 40 is the electric vehicle 120 shown in FIG. 1 is used for description.

Still refer to FIG. 3. Each energy storage device 320 is connected to the direct current bus 313 of each charging device 310 through the at least one switch module 330. The at least one switch module 330 is configured to connect or disconnect each energy storage device 320 and the direct current bus 313 of each charging device 310, for power transmission between each energy storage device 320 and the direct current bus 313 of each charging device 310.

It may be understood that, in this embodiment of this application, a specific implementation of the energy storage device 320 may be any implementation that can implement electrical energy storing and outputting functions. That is, the energy storage device 320 may be charged or discharged. For example, the energy storage device 320 may be an energy storage battery group, and the energy storage battery group may include a plurality of battery packs connected in series and/or in parallel. It should be noted that, when the energy storage device 320 is an energy storage battery group, an SOC of the energy storage device 320 may be an average value of SOCs of a plurality of battery packs included in the energy storage battery group.

During specific implementation, in some embodiments, the energy storage device 320 may further include a DC-DC conversion apparatus. The DC-DC conversion apparatus may be configured to perform voltage conversion on direct currents output by the plurality of battery packs, and transmit, to the direct current bus 313 of the charging device 310 through the at least one switch module 330, the direct currents output after the voltage conversion, so that voltage values of the direct currents output to the direct current bus 313 are equal to a voltage value of the direct current bus 313. This helps ensure that the energy storage device 320 normally transmits power to the direct current bus 313 of the charging device 310.

In addition, the DC-DC conversion apparatus may also be configured to: perform voltage conversion on a direct current transmitted by the direct current bus 313 of the charging device 310 through the at least one switch module 330, and transmit, to the plurality of battery packs, direct currents output after voltage conversion, so that voltage values of the direct currents transmitted to the plurality of battery packs meet required charging power of the plurality of battery packs. That is, the DC-DC conversion apparatus may be a bidirectional DC-DC conversion apparatus.

It may be further understood that, in this embodiment of this application, quantities of charging devices 310 and energy storage devices 320 may be the same or may be different. For ease of description and understanding, in this embodiment of this application, an example in which the quantity of charging devices 310 is the same as the quantity of energy storage devices 320 is used for description.

In this embodiment of this application, the plurality of energy storage devices 320 in the charging system 300 are connected to the direct current bus 313 of each charging device 310 in the charging system 300 through the at least one switch module 330, for power transmission between any energy storage device 320 in the charging system 300 and the direct current bus 313 of any charging device 310.

For example, when any charging device 310 in the charging system 300 charges the load 40, if output power of the charging device 310 is less than required charging power of the load 40, the energy storage devices 320 in the charging system 300 may transmit power to a direct current bus 313 of the charging device 310 through the at least one switch module 330, to increase the output power of the charging device 310, and meet the required charging power of the load 40.

It may be understood that the output power of the charging device 310 may be real-time output power of the charging device 310, or may be maximum output power of the charging device 310. For ease of description and understanding, in this embodiment of this application, an example in which the output power of the charging device 310 is the real-time output power of the charging device 310 is used for description.

It may be further understood that, when SOCs of the energy storage devices 320 in the charging system 300 differ greatly, if an energy storage device 320 with a low SOC continues to be used, that is, an energy storage device 320 with a low remaining battery level continues to be used to transmit power to the direct current bus 313 of the charging device 310, not only SOC imbalance between the energy storage devices 320 is increased, but also electrical energy stored in the energy storage device 320 with a high remaining battery level is not fully utilized, resulting in low utilization of energy storage resources in the charging system 300. In addition, an insufficient battery level may be caused in a process in which the energy storage device 320 with a low battery level transmits power to the direct current bus 313 of the charging device 310, and consequently, a service life of the energy storage device 320 is affected.

Therefore, during specific implementation, the at least one switch module 330 may preferentially connect, based on values of the SOCs of the energy storage devices 320 in the charging system 300, an energy storage device 320 with a high SOC and the direct current bus 313 of the charging device 310, so that the energy storage device 320 with a high remaining battery level preferentially transmits power to the direct current bus 313 of the charging device 310. Further, this can not only improve SOC balance between the energy storage devices 320 in the charging system 300, but also improve service lives of the energy storage devices 320 and utilization of energy storage resources in the charging system 300.

For another example, when a power grid price is a low valley electricity price, the charging device 310 in the charging system 300 may receive an alternating current from the power grid, and transmit the alternating current to the energy storage devices 320 through the at least one switch module 330 after power conversion, so that the energy storage devices 320 store as much electrical energy as possible. This may also be referred to as charging the energy storage device 320. Therefore, when any charging device 310 in the charging system 300 charges the load 40 in a case in which the power grid price is a peak electricity price, the energy storage device 320 may be preferentially used to transmit power to a direct current bus 313 of the charging device 310 through the at least one switch module 330, to reduce an alternating current at the peak power price that is received by the charging device 310 from the power grid. This reduces costs of charging the load 40 and relieves pressure on the power grid. That is, the energy storage device 320 is used to implement peak shaving and valley filling.

It may be understood that, when the SOCs of the energy storage devices 320 in the charging system 300 differ greatly, if power keeps to be transmitted to the energy storage device 320 with a high SOC through the direct current bus 313 of the charging device 310, that is, the energy storage device 320 with a high remaining battery level is always charged, SOC imbalance between the energy storage devices 320 is also increased. In addition, an insufficient battery level may be caused in a process in which the energy storage device 320 with a low battery level transmits power to the direct current bus 313 of the charging device 310, and consequently a service life of the energy storage device 320 is affected.

Therefore, during specific implementation, the at least one switch module 330 may preferentially connect, based on the values of the SOCs of the energy storage devices 320 in the charging system 300, the energy storage device 320 with a low SOC and the direct current bus 313 of the charging device 310, so that the charging device 310 preferentially charges the energy storage device 320 with a low remaining battery level. Further, this helps improve SOC balance between the energy storage devices 320 in the charging system 300.

In the foregoing technical solution, the energy storage devices 320 in the charging system 300 can be connected to the direct current buses 313 of the charging devices 310 in the charging system 300 through the at least one switch module 330. Further, the energy storage devices 320 in the charging system 300 can flexibly allocate power to the plurality of charging devices 310 in the charging system 300 based on an actual requirement, so that the energy storage devices 310 share power between the plurality of charging devices 310. This can not only improve utilization of energy storage resources in the charging system 300, but also increase output power of the charging devices 310 in the charging system 300, to meet required charging power of different loads.

For example, when the charging system 300 is applied to a full liquid-cooled ultra-fast charging station, a direct current bus 313 of any charging device 310 in the charging system 300 may receive, through the at least one switch module 330, power transmitted by the plurality of energy storage devices 320 in the charging system 300, to increase power output by the charging device 300 to an electric vehicle, and help meet a requirement for performing high-power ultra-fast charging on the electric vehicle. For example, 400 kW high-power ultra-fast charging is performed on the electric vehicle. This helps implement a charging speed of 1 kilometer per second, that is, helps charge the electric vehicle with enough energy for driving 1 kilometer per second, and brings charging experience of "charge up while your coffee up" to a user.

It may be understood that, when the charging system 300 is applied to the full liquid-cooled ultra-fast charging station, a charging power unit, a charging terminal, and a charging connector in each charging device 310 in the charging system 300 all dissipate heat through liquid cooling, and maximum output power of a single gun of each charging device 310 is greater than or equal to a preset power threshold. The preset power threshold may be, for example, 250 kW.

In addition, if the plurality of energy storage devices 320 are directly connected to direct current buses 313 of different charging devices 310, for example, two energy storage devices 320 shown in FIG. 3 are directly connected to direct current buses 313 of two charging devices 310, and the direct current buses 313 of the two charging devices 310 are connected, the energy storage devices 320 can also share power between the two charging devices 310. However, connecting the direct current buses 313 of the two charging devices 310 easily leads to a loop between the direct current buses 313 of the two charging devices 310 and the transformer 30 connected to the front stage and causes a circulating current, and consequently, overall running safety of the charging system 300 is affected.

However, in this embodiment of this application, the energy storage devices 320 in the charging system 300 share power between the plurality of charging devices 310 through the at least one switch module 330, and direct current buses 313 of different charging devices 310 do not need to be connected. This helps avoid a circulating current caused in the charging system 300 because direct current buses 313 of different charging devices 310 are connected, to improve overall running safety of the charging system 300.

The following describes, by using an example, a specific implementation in which each energy storage device 320 is connected to a direct current bus 313 of each charging device 310 through the at least one switch module 330.

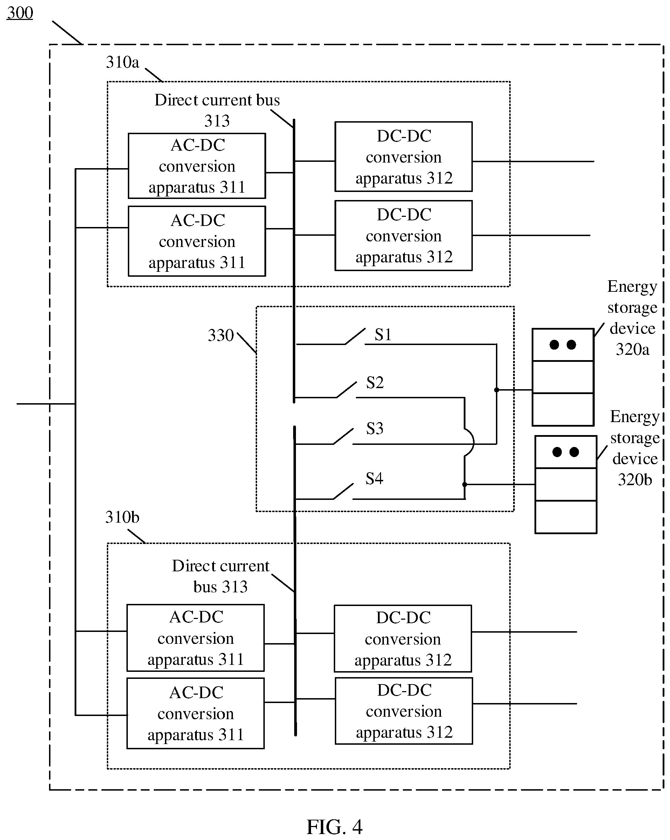

FIG. 4 is a diagram of a structure of an example of the charging system 300 according to an embodiment of this application.

Refer to FIG. 4. In some embodiments, the charging system 300 may include a plurality of charging devices 310, a plurality of energy storage devices 320, and one switch module 330. The switch module 330 may include a plurality of switches, and each energy storage device 320 is connected to a direct current bus 313 of one charging device 310 through one switch in the switch module 330.

For example, as shown in FIG. 4, the charging system 300 includes two charging devices (that is, a charging device 310a and a charging device 310b) and two energy storage devices 320 (that is, an energy storage device 320a and an energy storage device 320b). The charging system 300 includes one switch module 330, and the switch module 330 includes a switch S1, a switch S2, a switch S3, and a switch S4. The energy storage device 320a is connected to a direct current bus 313 of the charging device 310a through the switch S1, and is connected to a direct current bus 313 of the charging device 310b through the switch S3. The energy storage device 320b is connected to the direct current bus 313 of the charging device 310a through the switch S2, and is connected to the direct current bus 313 of the charging device 310b through the switch S4.

In an example, the energy storage device 320a and the energy storage device 320b transmit power to the direct current bus 313 of the charging device 310a. The switch S1 and the switch S2 are turned on, so that the power output by the energy storage device 320a and the power output by the energy storage device 320b can be transmitted to the direct current bus 313 of the charging device 310a respectively through the switch S1 and the switch S2, to increase output power of the charging device 310a.

It may be understood that, during specific implementation, the switch module 330 may be integrated into a box independently disposed in the charging system 300, and is separately connected to the direct current bus 313 of the charging device 310a, the direct current bus 313 of the charging device 310b, the energy storage device 320a, and the energy storage device 320b through the box.

In the foregoing technical solution, each energy storage device 320 in the charging system 300 may be connected to the direct current bus 313 of each charging device 310 through one switch module 330. An overall connection structure of the charging system 300 is simple, and helps reduce design costs of the charging system 300.

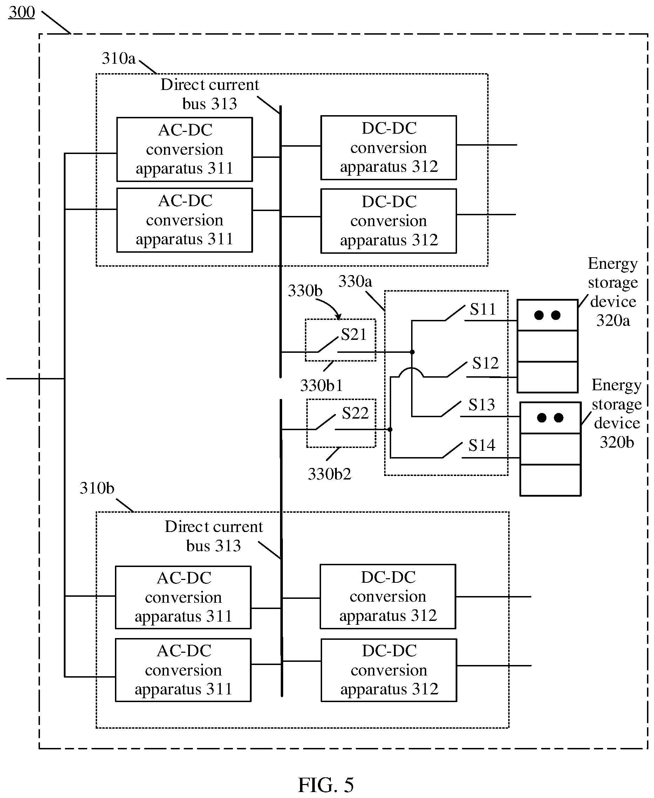

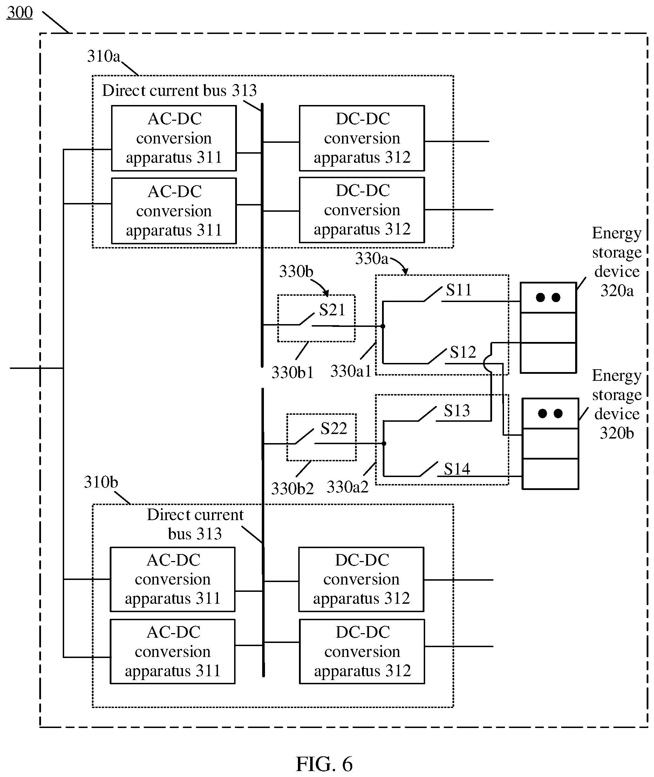

FIG. 5 and FIG. 6 each are a diagram of a structure of another example of the charging system 300 according to an embodiment of this application.

With reference to FIG. 5 and FIG. 6, different from the embodiment shown in FIG. 4, in some embodiments, the charging system 300 may include a plurality of charging devices 310, a plurality of energy storage devices 320, and a plurality of switch modules 330. The plurality of switch modules 330 include at least one first switch module 330a and a plurality of second switch modules 330b.

Each energy storage device 320 is connected to one end of each of the plurality of second switch modules 330b through the at least one switch module 330a, and the other ends of the plurality of second switch modules 330b are connected to direct current buses 313 of the plurality of charging devices 310 in one-to-one correspondence. The at least one first switch module 330a is configured to connect or disconnect each energy storage device 320 and each second switch module 330b. Each second switch module 330b is configured to connect or disconnect a direct current bus 313 of a charging device 310a corresponding to each second switch module 330b and the energy storage device 320 that is connected through the first switch module 330a.

It may be understood that, in this embodiment of this application, the plurality of switch modules 330 are configured as two-stage switch modules including the first switch module 330a and the second switch module 330b. The first switch module 330a controls whether each energy storage device 320 is connected to the charging system 300 to transmit power to a direct current bus 313 of a specified charging device 310, and the second switch module 330b controls the energy storage device 320 that has been connected to the charging system 300 to transmit power to a direct current bus 313 of a specified charging device 310. Therefore, any energy storage device 320 in the charging system 300 can transmit power to a direct current bus 313 of any charging device 310.

During specific implementation, in some embodiments, as shown in FIG. 5, the plurality of switch modules 330 in the charging system 300 may include one first switch module 330a and a plurality of second switch modules 330b. Each energy storage device 320 is connected to one end of each of the plurality of second switch modules 330b through the same first switch module 330a, and the other ends of the plurality of second switch modules 330b are connected to the direct current buses 313 of the plurality of charging devices 310 in one-to-one correspondence.

For example, as shown in FIG. 5, an example in which the charging system 300 includes the charging device 310a, the charging device 310b, the energy storage device 320a, and the energy storage device 320b is still used. The plurality of switch modules 330 in the charging system 300 include one first switch module 330a and two second switch modules 330b (that is, a second switch module 330b1 and a second switch module 330b2). The first switch module 330a includes a first switch S11, a first switch S12, a first switch S13, and a first switch S14, the second switch module 330b1 includes a second switch S21, and the second switch module 330b2 includes a second switch S22. The energy storage device 320a is connected to one end of the first switch S11, the energy storage device 320b is connected to one end of the first switch S13, the other end of the first switch S11 and the other end of the first switch S13 are connected in parallel and then connected to one end of the second switch S21, and the other end of the second switch S21 is connected to the direct current bus of the charging device 310a.

Similarly, the energy storage device 320a is connected to one end of the first switch S12, the other end of the energy storage device 320b is connected to one end of the first switch S14, the other end of the first switch S12 and the other end of the first switch S14 are connected in parallel and then connected to one end of the second switch S22, and the other end of the second switch S22 is connected to the direct current bus 313 of the charging device 310b.

In an example, the energy storage device 320a and the energy storage device 320b transmit power to the direct current bus 313 of the charging device 310a. The first switch S11 and the first switch S13 are turned on, so that the energy storage device 320a and the energy storage device 320b are connected to the charging system 300, to transmit power to the direct current bus 313 of the specified charging device 310a. Further, the second switch S21 is turned on, so that the energy storage device 320a and the energy storage device 320b that are connected to the charging system 300 transmit power to the direct current bus 313 of the charging device 310a. Further, power output by the charging device 320a can be transmitted to the direct current bus 313 of the charging device 310a through the first switch S11 and the second switch S21, and power output by the charging device 320b can be transmitted to the direct current bus 313 of the charging device 310b through the first switch S13 and the second switch S21, to increase output power of the charging device 310a.

During specific implementation, for example, the first switch module 330a may be integrated into a box independently disposed in the charging system 300, the second switch module 330b1 may be disposed in the correspondingly connected charging device 310a, and the second switch module 330b2 may be disposed in the correspondingly connected charging device 310b, and the second switch modules are separately connected to the first switch module 330a through the box independently disposed in the charging system 300.

In the foregoing technical solution, the plurality of switch modules 330 in the charging system 300 are configured as one first switch module 330a, and the plurality of second switch modules 330b that are correspondingly connected to the direct current buses 313 of the plurality of charging devices 310, to implement power transmission between any energy storage device 320 and the direct current bus 313 of any charging device 310 in the charging system 300, so that the energy storage devices 320 in the charging system 300 flexibly allocate power to the plurality of charging devices 310. In addition, in actual application, the plurality of second switch modules 330b each can be disposed in the correspondingly connected charging device 310, so that a connection between each second switch module 330b and a direct current bus 313 of a corresponding charging device 310 better meets a safety regulation requirement of the corresponding charging device 310, to improve overall safety of the charging system 300.

In some other embodiments, as shown in FIG. 6, different from the embodiment shown in FIG. 5, the plurality of switch modules 330 in the charging system 300 may include a plurality of first switch modules 330a and a plurality of second switch modules 330b. Each energy storage device 320 is connected to one end of each of the plurality of first switch modules 330a, the other ends of the plurality of first switch modules 330a are connected to ends of the plurality of second switch modules 330b in one-to-one correspondence, and the other ends of the plurality of second switch modules 330b are connected to the direct current buses 313 of the plurality of charging devices 310 in one-to-one correspondence. That is, quantities of the plurality of first switch modules 330a, the plurality of second switch modules 330b, and the plurality of charging devices 310 in the charging system are equal.

For example, as shown in FIG. 6, an example in which the charging system 300 includes the charging device 310a, the charging device 310b, the energy storage device 320a, and the energy storage device 320b is still used. The plurality of switch modules 330 in the charging system 300 include two first switch modules 330a (that is, a first switch module 330a1 and a first switch module 330a2) and two second switch modules 330b (that is, a second switch module 330b1 and a second switch module 330b2). The first switch module 330a1 includes a first switch S11 and a first switch S12, the first switch module 330a2 includes a first switch S13 and a first switch S14, the second switch module 330b1 includes a second switch S21, and the second switch module 330b2 includes a second switch S22. The energy storage device 320a is connected to one end of the first switch S11, the energy storage device 320b is connected to one end of the first switch S12, the other end of the first switch S11 and the other end of the first switch S12 are connected in parallel and then connected to one end of the second switch S21, and the other end of the second switch S21 is connected to the direct current bus of the charging device 310a.

Similarly, the energy storage device 320a is connected to one end of the first switch S13, the other end of the energy storage device 320b is connected to one end of the first switch S14, the other end of the first switch S13 and the other end of the first switch S14 are connected in parallel and then connected to one end of the second switch S22, and the other end of the second switch S22 is connected to the direct current bus 313 of the charging device 310b.

In an example, the energy storage device 320a and the energy storage device 320b transmit power to the direct current bus 313 of the charging device 310a. The first switch S11 and the first switch S12 are turned on, so that the energy storage device 320a and the energy storage device 320b are connected to the charging system 300, to transmit power to the direct current bus 313 of the specified charging device 310a. Further, the second switch S21 is turned on, so that the energy storage device 320a and the energy storage device 320b that are connected to the charging system 300 transmit power to the direct current bus 313 of the charging device 310a.

During specific implementation, for example, the quantity of the plurality of first switch modules 330a is the same as the quantity of the plurality of second switch modules 330b in the charging system 300, and the other ends of the plurality of first switch modules 330a are connected to the ends of the plurality of second switch modules 330b in one-to-one correspondence. Therefore, each first switch module 330a and a corresponding second switch module 330b may be disposed in one box. For example, each first switch module 330a and the corresponding second switch module 330b may be disposed in a charging device 310 that is correspondingly connected to the corresponding second switch module 330b.

In the foregoing technical solution, the plurality of switch modules 330 in the charging system 300 are configured as the plurality of first switch modules 330a and the plurality of second switch modules 330b that are correspondingly connected, and the plurality of switch modules 330a are correspondingly connected to the direct current buses 313 of the plurality of charging devices 310a, to implement power transmission between any energy storage device 320 and a direct current bus 313 of any charging device 310 in the charging system 300, so that the energy storage devices 320 in the charging system 300 flexibly allocate power to the plurality of charging devices 310. In addition, in actual application, each first switch module 330a and the corresponding second switch module 330b may be disposed in the correspondingly connected charging device 310. That is, the plurality of switch modules 330 in the charging system 300 each can be disposed in the correspondingly connected charging device 310, so that a connection between each switch module 330 and a direct current bus 313 of the corresponding charging device 310 better meets a safety regulation requirement of the corresponding charging device 310, to improve overall safety of the charging system 300.

It may be understood that specific structures of the plurality of switch modules 330 in the charging system 300 described in the foregoing embodiments are merely examples, provided that the plurality of switch modules 330 can disconnect or connect each energy storage device 320 in the charging system 300 and the direct current bus 313 of each charging device 310 in embodiments of this application.

The foregoing describes the structures of the charging system 300 provided in the embodiments of this application. The following describes a working process in which the charging system 300 charges the load 40.

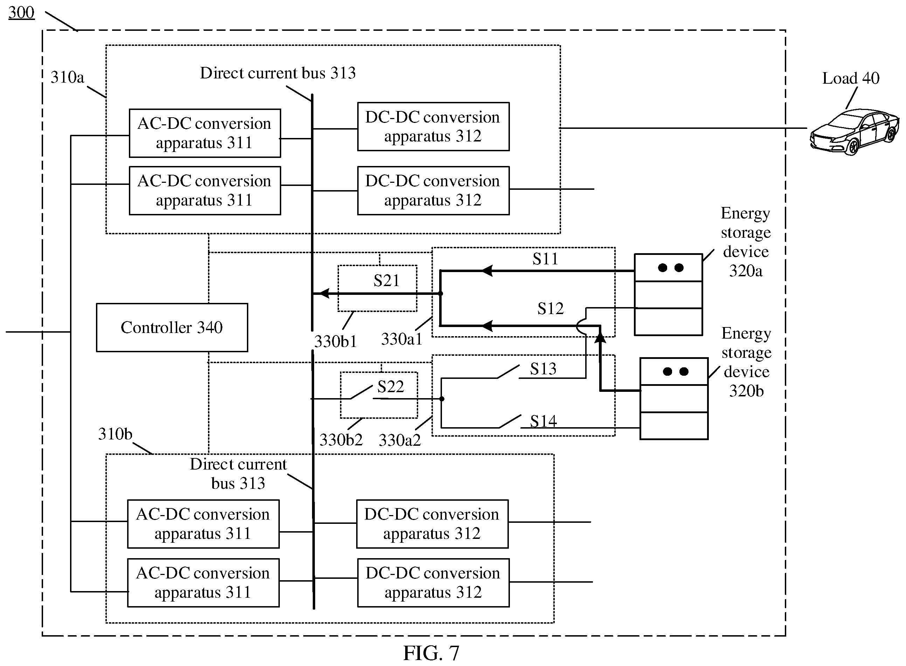

FIG. 7 is a diagram of a structure of an example of the charging system 300 according to an embodiment of this application.

Refer to FIG. 7. The charging system 300 includes a plurality of charging devices 310, a plurality of energy storage devices 320, at least one first switch module 330a, and a plurality of second switch modules 330b. When one charging device 310 in the charging system 300 charges the load 40, in response to output power of the charging device 310 being less than required charging power of the load, the at least one first switch module 330a is configured to connect the plurality of energy storage devices 320 and a second switch module 330b corresponding to a direct current bus 313 of the charging device 310. The corresponding second switch module 330b is configured to connect the direct current bus 313 of the charging device 310 and the energy storage devices 320 that are connected through the at least one first switch module 330a. Further, the plurality of energy storage devices 320 in the charging system 300 can transmit power to the direct current bus 313 of the charging device 310, to increase the output power of the charging device 310, and help meet the required charging power of the load 40.

Specifically, as shown in FIG. 7, for example, the charging system 300 includes a charging device 310a, a charging device 310b, an energy storage device 320a, an energy storage device 320b, a first switch module 330a1, a first switch module 330a2, a second switch module 330b1, and a second switch module 330b2. When the charging device 310a charges the load 40, in response to output power of the charging device 310a being less than the required charging power of the load 40, a first switch S11 and a first switch S12 in the first switch module 330a1 are turned on, to connect the energy storage devices 320a and 320b and the second switch module 330b1, and a second switch S21 in the second switch module 330b1 is turned on, to connect the energy storage device 320a and the energy storage device 320b and the direct current bus 313 of the charging device 310a.

Therefore, the energy storage device 320a and the energy storage device 320b can transmit power to the direct current bus 313 of the charging device 310a through the first switch module 330a1 and the second switch module 330b1. Power transmission paths may be shown by thick-line arrows in FIG. 7.

During specific implementation, in some embodiments, the charging system 300 may further include a controller 340. The controller 340 may be connected to the charging devices 310, the energy storage devices 320, and the switch modules 330 in the charging system 300, and is configured to control the charging devices 310, the energy storage devices 320, and the switch modules 330. For example, the controller 340 may be configured to control the first switch S11 and the first switch S12 in the first switch module 330a1 to be turned on, so that the first switch module 330a1 connects the energy storage devices 320a and 320b and the second switch module 330b1.

It may be understood that, in this embodiment of this application, the controller 340 may be used as a main controller of the charging system 300, and is integrated into any charging device 310 in the charging system 300.

Further, in some embodiments, that when one charging device 310 in the charging system 300 charges the load 40, in response to output power of the charging device 310 being less than required charging power of the load, the at least one first switch module 330a is configured to connect the plurality of energy storage devices 320 and a second switch module 330b corresponding to a direct current bus 313 of the charging device 310 may specifically include:
in response to a difference between SOCs of any two of the plurality of energy storage devices 320 being greater than a preset SOC difference, the at least one first switch module 330a is configured to: connect an energy storage device 320 with a higher SOC in the two energy storage devices 320 and the second switch module 330b corresponding to the direct current bus 313 of the charging device 310; or
in response to a difference between SOCs of any two of the plurality of energy storage devices 320 being less than or equal to the preset SOC difference, the at least one first switch module 330a is configured to: connect each of the two energy storage devices 320 and the second switch module 330b corresponding to the direct current bus 313 of the charging device 310.

It may be understood that, that a difference between SOCs of any two energy storage devices 320 is greater than the preset SOC difference may mean that remaining battery levels of the two energy storage devices 320 differ greatly. That a difference between SOCs of any two energy storage devices 320 is less than or equal to the preset SOC difference may mean that remaining battery levels of the two energy storage devices 320 are equal or differ slightly. The preset SOC difference may be flexibly adjusted according to an actual requirement. For example, the preset SOC difference may be 5%, 8%, 10%, or the like.

When the remaining battery levels of the two energy storage devices 320 differ greatly, the at least one first switch module 330a connects an energy storage device 320 with a higher SOC in the two energy storage devices 320 and the direct current bus 313 of the charging device 310, so that the energy storage device 320 with a higher remaining battery level in the two energy storage devices 320 can preferentially transmit power to the direct current bus 313 of the charging device 310. Further, this can not only increase the output power of the charging device 310, to meet the required charging power of the load 40, but also reduce a difference between the remaining battery levels of the two energy storage devices 320, to help improve SOC balance between the two energy storage devices 320.

When the remaining battery levels of the two energy storage devices 320 are equal or differ slightly, the at least one first switch module 330a connects each of the two energy storage devices 320 and the direct current bus 313 of the charging device 310, so that the two energy storage devices 320 can simultaneously transmit power to the direct current bus 313 of the charging device 310. Further, this can not only better increase the output power of the charging device 310, to meet the required charging power of the load 40, but also ensure that the remaining battery levels of the two energy storage devices 320 maintain equal or differ slightly, to help improve SOC balance between the two energy storage devices 320.

For example, refer to FIG. 7. An example in which the charging device 310a charges the load 40 is still used. When an SOC of the energy storage device 320a is 30%, and an SOC of the energy storage device 320b is 70%, the remaining battery levels of the energy storage device 320a and the energy storage device 320b differ greatly, and the first switch S12 in the first switch module 330a1 and the second switch S21 in the second switch module 330b2 are turned on, so that the energy storage device 320b preferentially transmits power to the direct current bus 313 of the charging device 310a. Further, this helps reduce a difference between remaining battery levels of the energy storage device 320a and the energy storage device 320b, to improve SOC balance between the energy storage device 320a and the energy storage device 320b.

Alternatively, when the SOC of the energy storage device 320a is 68%, and the SOC of the energy storage device 320b is 70%, the remaining battery levels of the energy storage device 320a and the energy storage device 320b differ slightly, and the first switch S11 and the first switch S12 in the first switch module 330a1 and the second switch S21 in the second switch module 330b2 are turned on, so that the energy storage device 320a and the energy storage device 320b simultaneously transmit power to the direct current bus 313 of the charging device 310a. Further, this helps maintain a small difference between the remaining battery levels of the energy storage device 320a and the energy storage device 320b, to improve SOC balance between the energy storage device 320a and the energy storage device 320b.

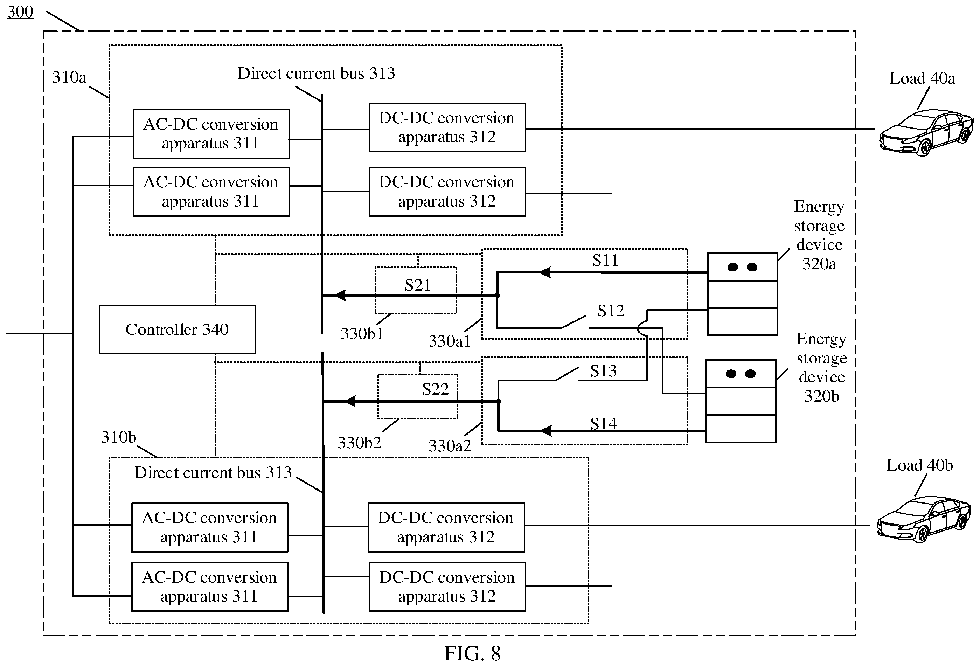

FIG. 8 is a diagram of a structure of another example of the charging system 300 according to an embodiment of this application.

Different from the embodiment shown in FIG. 7 in which one charging device 310 in the charging system 300 charges the load 40, in the embodiment shown in FIG. 8, two charging devices 310 in the charging system 300 each charge a load 40. In response to output power of both the two charging devices 310 being less than required output power of the load 40, at least one switch module 330a is configured to: connect a part of energy storage devices 320 in the plurality of energy storage devices 320 and a second switch module 330b corresponding to a direct current bus 313 of one charging device 310, and connect the other part of energy storage devices 320 and a second switch module 330b corresponding to the direct current bus 313 of the other charging device 310.

Therefore, the part of energy storage devices 320 transmit power to the direct current bus 313 of the charging device 310 through the corresponding second switch module 330b, and the other part of energy storage devices 320 transmit power to the direct current bus 313 of the other charging device 310 through the corresponding second switch module 330b. That is, any energy storage device 320 transmits power to a direct current bus 313 of only one of the two charging devices 310.

Further, in some embodiments, when a difference between output power of one charging device 310 and required charging power of the load 40 is greater than a difference between output power of the other charging device 310 and required charging power of the load 40, an average value of SOCs of the part of energy storage devices 320 is greater than an average value of SOCs of the other part of energy storage devices 320. That is, during specific implementation, if output power required by one charging device 310 is greater than output power required by the other charging device 310, a part of energy storage devices 320 with higher remaining battery levels in the plurality of energy storage devices 320 are selected to transmit power to the direct current bus 313 of the charging device 310, and a part of energy storage devices 320 with lower remaining battery levels are selected to transmit power to the direct current bus 313 of the other charging device 310, so that the two charging devices 310 can better meet required charging power of different loads 40.

Specifically, refer to FIG. 8. An example in which the charging system 300 shown in FIG. 6 includes the charging device 310a, the charging device 310b, the energy storage device 320a, the energy storage device 320b, the first switch module 330a1, the first switch module 330a2, the second switch module 330b1, and the second switch module 330b2 is still used. When the charging device 310a charges a load 40a, and the charging device 310b charges a load 40b, in response to output power of the charging device 310a being less than required charging power of the load 40a, and output power of the charging device 310b being less than required output power of the load 40b, a first switch S11 in the first switch module 330a1 and a second switch S21 in the second switch module 330b1 are turned on, to connect the energy storage device 320a and a direct current bus 313 of the charging device 310a. At the same time, a first switch S14 in the first switch module 330a2 and a second switch S22 in the second switch module 330b2 are turned on, to connect the energy storage device 320b and a direct current bus 313 of the charging device 310b.

Therefore, the energy storage device 320a transmits power to the direct current bus 313 of the charging device 310a through the first switch module 330a1 and the second switch module 330b1, and the energy storage device 320b transmits power to the direct current bus 313 of the charging device 310b through the first switch module 330a2 and the second switch module 330b2, to increase the output power of the charging device 310a and the charging device 310b, and help meet the required charging power of the load 40a and the load 40b. Power transmission paths are shown by thick-line arrows in FIG. 8.

It may be understood that, if the energy storage device 320a (or the energy storage device 320b) simultaneously transmits power to the direct current bus 313 of the charging device 310a and the direct current bus 313 of the charging device 310b, a loop formed between the energy storage device 320a, the direct current bus 313 of the charging device 310a, the direct current bus 313 of the charging device 310b, and the transformer 30 connected to the front stage easily causes a circulating current, and consequently, overall running safety of the charging system 300 is affected.

However, in this embodiment of this application, the first switch module 330a and the second switch module 330b connect the energy storage device 320a and the direct current bus 313 of the charging device 310a and between the energy storage device 320b and the direct current bus 313 of the charging device 310b, so that the energy storage device 320a and the energy storage device 320b each simultaneously transmit power to the direct current bus 313 of only one charging device 310. This can not only increase the output power of the charging device 310, to meet the required charging power of the load 40, and but also avoid a circulating current that is caused in the charging system 300 because one energy storage device 320 simultaneously transmits power to direct current buses 313 of different charging devices 310, to improve overall running safety of the charging system 300.

It may be further understood that when a difference between the output power of the charging device 310a and the required charging power of the load 40a is greater than a difference between the output power of the charging device 310b and the required charging power of the load 40b, an SOC of the energy storage device 320a is higher than an SOC of the energy storage device 320b. That is, to separately meet the required charging power of the load 40a and the load 40b, the charging device 310a needs larger output power than the charging device 310b.

In this case, the energy storage device 320a with a higher remaining battery level is selected to transmit power to the direct current bus 313 of the charging device 310a, and the energy storage device 320b with a lower remaining battery level is selected to transmit power to the direct current bus 313 of the charging device 310b. This not only helps enable the output power of the charging device 310a and the charging device 310b to respectively meet the required charging power of the load 40a and the load 40b, but also helps improve SOC balance between the energy storage device 320a and the energy storage device 320b.

It should be noted that the embodiments shown in FIG. 7 and FIG. 8 are described by using an example in which all the plurality of energy storage devices 320 in the charging system 300 can be discharged. During specific implementation, when an SOC of an energy storage device 320 is higher than or equal to a preset SOC threshold, the energy storage device 320 has a high remaining battery level, and can be discharged. When the SOC of the energy storage device 320 is lower than the preset SOC threshold, the energy storage device 320 has a low the remaining battery level, and can only be charged but cannot be discharged. The preset SOC threshold may be flexibly adjusted according to an actual requirement, for example, may be 20% or 25%.

The foregoing describes a structure of the charging system 300 provided in embodiments of this application. The following describes a charging method that may be applied to the charging system 300 provided in embodiments of this application.

It should be understood that descriptions of the following method embodiments correspond to the descriptions of the foregoing structure embodiments. Therefore, for content that is not described in detail, refer to the foregoing apparatus embodiments. Details are not described below.

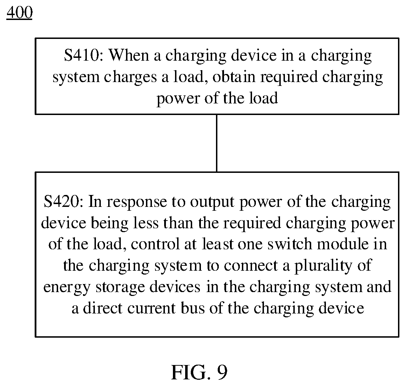

FIG. 9 is a schematic flowchart of a charging method 400 according to an embodiment of this application. The charging method 400 may be applied to the charging system 300, and may be specifically performed by a system controller in the charging system 300, for example, may be performed by a controller 340.

Refer to FIG. 9. The charging method 400 may include the following steps.

S410: When one charging device in the charging system charges a load, obtain required charging power of the load.

Specifically, with reference to FIG. 5 and FIG. 6, after one charging device 310 in the charging system 300 is connected to the load 40, the controller 340 may obtain real-time output power of the charging device 310 and required charging power of the load 40, to determine whether the real-time output power of the charging device 310 is less than the required charging power of the load 40.

For example, the controller 340 may be communicatively connected to the charging device 310 and the load 40, to receive information that indicates the real-time output power from the charging device 310, and information that indicates the required charging power from the load 40.

S420: In response to the output power of the charging device being less than the required charging power of the load, control at least one switch module in the charging system to connect a plurality of energy storage devices in the charging system and a direct current bus of the charging device, so that the plurality of energy storage devices transmit power to the direct current bus of the charging device, to increase the output power of the charging device, and help meet the required charging power of the load. The direct current bus of the charging device is configured to: aggregate direct currents output by AC-DC conversion apparatuses in the charging device, and output an aggregated direct current to the load through a DC-DC conversion apparatus.

In some embodiments, step S420 may specifically include:
in response to the output power of the charging device being less than the required charging power of the load, controlling at least one first switch module to connect the plurality of energy storage devices and a second switch module corresponding to the direct current bus of the charging device, and controlling the second switch module corresponding to the direct current bus of the charging device to connect the direct current bus of the charging device and the energy storage devices that are connected through the at least one first switch module. The at least one first switch module and the second switch module corresponding to the direct current bus of the charging device belong to the at least one switch module.

For specific descriptions, refer to the foregoing apparatus embodiments. Details are not described herein again.

In the foregoing technical solution, the plurality of energy storage devices in the charging system are connected to a direct current bus of any charging device in the charging system through the at least one switch module. Further, when output power of the charging device does not meet the required charging power of the load, the at least one switch module can be controlled to connect the plurality of energy storage devices and the direct current bus of the charging device, so that power of the plurality of energy storage devices can be shared with the direct current bus of the charging device, to increase the output power of the charging device, and help meet the required charging power of the load.

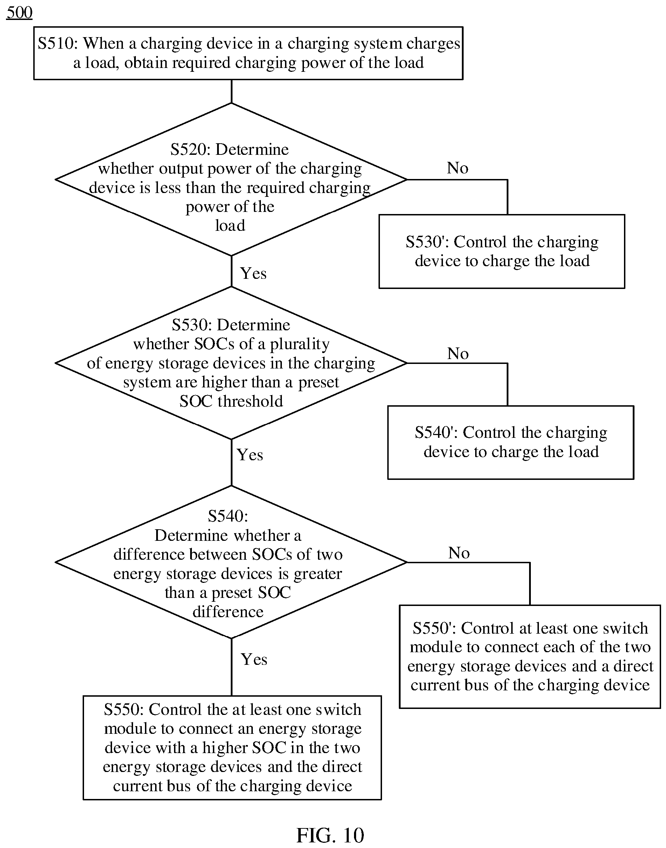

The following further describes in detail a charging method provided in an embodiment of this application with reference to FIG. 10.

FIG. 10 is a schematic flowchart of a charging method 500 according to an embodiment of this application. The charging method 500 may be applied to the charging system 300, and may be specifically performed by a system controller in the charging system 300, for example, may be performed by a controller 340.

Refer to FIG. 10. The charging method 500 may include the following steps.

S510: When one charging device in the charging system charges a load, obtain required charging power of the load.

For specific descriptions of step S510, refer to the related descriptions of step S610. Details are not described herein again.

S520: Determine whether output power of the charging device is less than the required charging power of the load.

In a possible case, if the output power of the charging device is greater than or equal to the required charging power of the load, it indicates that real-time output power of the charging device meets the required charging power of the load. In this case, S530' is performed.

S530': Control the charging device to charge the load.

It may be understood that when the real-time output power of the charging device meets the required charging power of the load, the charging device may obtain power only from a power grid to meet a requirement for charging the load.

In another possible case, if the output power of the charging device is less than the required charging power of the load, it indicates that the real-time output power of the charging device does not meet the required charging power of the load. In this case, S530 is performed.

S530: Determine whether SOCs of a plurality of energy storage devices in the charging system are lower than a preset SOC threshold.

Specifically, with reference to FIG. 5 and FIG. 6, the controller 340 may obtain information that indicates an SOC of each energy storage device 320 in the charging system 300 from the energy storage device 320, to determine whether the SOC of each energy storage device 320 is lower than the preset SOC threshold.

In a possible case, if the SOC of each energy storage device in the charging system is lower than the preset SOC threshold, it indicates that a remaining battery level of each energy storage device in the charging system is low, and each energy storage device in the charging system can only be charged but cannot be discharged. In this case, S530' is performed.

S530': Control the charging device to charge the load.

In another possible case, if an SOC of at least one energy storage device in the charging system is higher than or equal to the preset SOC threshold, it indicates that a remaining battery level of the at least one energy storage device is high. In this case, the at least one energy storage device can be discharged.

In an example, if an SOC of only one energy storage device in the charging system is higher than or equal to the preset SOC threshold, at least one switch module in the charging system is controlled to connect the energy storage device and a direct current bus of the charging device, so that the energy storage device transmits power to the direct current bus of the charging device, to increase the output power of the charging device.

In another example, if all SOCs of a plurality of energy storage devices in the charging system are higher than or equal to the preset SOC threshold, it indicates that all remaining battery levels of the plurality of energy storage devices are high, and all the plurality of energy storage devices can be discharged. In this case, S540 is performed.

S540: Determine whether a difference between SOCs of any two of the plurality of energy storage devices whose SOCs are higher than or equal to the preset SOC preset threshold is greater than a preset SOC preset difference.

In a possible case, if the difference between the SOCs of the two energy storage devices is less than or equal to the preset SOC difference, it indicates that the remaining battery levels of the two energy storage devices differ slightly. In this case, S550' is performed.

S550': In response to the difference between the SOCs of the two energy storage devices being less than or equal to the preset SOC difference, control the at least one switch module in the charging system to connect each of the two energy storage devices and the direct current bus of the charging device, so that the two energy storage devices transmit power to the direct current bus of the charging device, to increase the output power of the charging device.

In some embodiments, S550' may specifically include:
in response to the difference between the SOCs of the two energy storage devices being less than or equal to the preset SOC difference, controlling at least one first switch module in the charging system to connect each of the two energy storage devices and a second switch module corresponding to the direct current bus of the charging device, where the second switch module corresponding to the direct current bus of the charging device is configured to connect the direct current bus of the charging device and the two energy storage devices that are connected through the at least one first switch module.

For specific descriptions, refer to the foregoing apparatus embodiments. Details are not described herein again.

In the foregoing technical solution, when the remaining battery levels of the two energy storage devices differ slightly, the first switch module and the second switch module are controlled to connect each of the two energy storage devices and the direct current bus of the charging device, so that both the two energy storage devices transmit power to the direct current bus of the charging device, to improve SOC balance between the two energy storage devices.

In another possible case, if the difference between the SOCs of the two energy storage devices is greater than the preset SOC difference, it indicates that the remaining battery levels of the two energy storage devices differ greatly. In this case, S550 is performed.

S550: In response to the difference between the SOCs of the two energy storage devices being greater than the preset SOC difference, control the at least one switch module in the charging system to connect an energy storage device with a higher SOC in the two energy storage devices and the direct current bus of the charging device, so that the energy storage device with the higher SOC in the two energy storage devices transmits power to the direct current bus of the charging device, to increase the output power of the charging device.

In some embodiments, S550 may specifically include:
in response to the difference between the SOCs of the two energy storage devices being greater than the preset SOC difference, controlling at least one first switch module in the charging system to connect an energy storage device with a higher SOC in the two energy storage devices and the second switch module corresponding to the direct current bus of the charging device, where the second switch module corresponding to the direct current bus of the charging device is configured to connect the direct current bus of the charging device to the energy storage device with the higher SOC that is connected through the at least one first switch module.

For specific descriptions, refer to the foregoing apparatus embodiments. Details are not described herein again.

In the foregoing technical solution, when the remaining battery levels of the two energy storage devices differ slightly, the first switch module and the second switch module are controlled to connect the energy storage device with the higher SOC in the two energy storage devices to the direct current bus of the charging device, so that the energy storage device with the higher SOC in the two energy storage devices preferentially transmits power to the direct current bus of the charging device, to improve SOC balance between the two energy storage devices.

In some embodiments, the method 500 may further include:
when the charging device and the other charging device in the charging system each charge a load, in response to the output power of the charging device and output power of the other charging device being less than output power of the load, controlling the at least one first switch module in the charging system to connect a part of energy storage devices in the plurality of energy storage devices and the second switch module corresponding to the direct current bus of the charging device, and connect the other part of energy storage devices and a second switch module corresponding to a direct current bus of the other charging device.

It may be understood that an SOC of each of the plurality of energy storage devices is higher than or equal to the preset SOC preset threshold. That is, all the plurality of energy storage devices can be discharged.

Therefore, the part of energy storage devices in the plurality of energy storage devices transmit power to the direct current bus of the charging device, and the other part of energy storage devices transmit power to the direct current bus of the other charging device. This can not only increase output power of the two charging devices, to help meet the required charging power of the load, but also help avoid a circulating current that is generated in the charging system because one energy storage device simultaneously transmits power to direct current buses of different charging devices in the charging system, to improve overall running safety of the charging system.

Further, in an example, when a difference between the output power of the charging device and the required charging power of the load is greater than a difference between the output power of the other charging device and the required charging power of the load, an average value of SOCs of the part of energy storage devices is greater than an average value of SOCs of the other part of energy storage devices. This can not only increase the output power of the two charging devices, but also help improve SOC balance between the energy storage devices.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging system, comprising a plurality of charging devices, a plurality of energy storage devices, and at least one switch module, wherein
each charging device comprises an alternating current-to-direct current AC-DC conversion apparatus, a direct current bus, and a direct current-to-direct current DC-DC conversion apparatus, the AC-DC conversion apparatus is configured to: convert an alternating current into a direct current and output the direct current to the direct current bus, and the DC-DC conversion apparatus is configured to: obtain a direct current from the direct current bus, and output the direct current to a load after power conversion;
each energy storage device is connected to the direct current bus of each charging device through the at least one switch module; and
the at least one switch module is configured to connect or disconnect each energy storage device and the direct current bus of each charging device, for power transmission between each energy storage device and the direct current bus of each charging device.

2. The charging system according to claim 1, wherein the at least one switch module comprises at least one first switch module and a plurality of second switch modules;
each energy storage device is connected to one end of each second switch module through a same first switch module, and the other ends of the plurality of second switch modules are connected to the direct current buses of the plurality of charging devices in one-to-one correspondence; or
each energy storage device is connected to one end of each of the plurality of first switch modules, the other ends of the plurality of first switch modules are connected to ends of the plurality of second switch modules in one-to-one correspondence, and the other ends of the plurality of second switch modules are connected to the direct current buses of the plurality of charging devices in one-to-one correspondence.

3. The charging system according to claim 2, wherein
when one charging device charges the load, in response to output power of the charging device being less than required charging power of the load, the at least one first switch module is configured to connect the plurality of energy storage devices and a second switch module corresponding to a direct current bus of the charging device, and the second switch module corresponding to the direct current bus of the charging device is configured to connect the direct current bus of the charging device and the energy storage devices that are connected through the at least one first switch module.

4. The charging system according to claim 3, wherein that the at least one first switch module is configured to connect the plurality of energy storage devices and the second switch module corresponding to the direct current bus of the charging device comprises:
in response to a difference between states of charge SOCs of two of the energy storage devices being greater than a preset SOC difference, the at least one first switch module is configured to connect an energy storage device with a higher SOC in the two energy storage devices and the second switch module corresponding to the direct current bus of the charging device; or
in response to a difference between states of charge SOCs of two of the energy storage devices being less than or equal to the preset SOC difference, the at least one first switch module is configured to connect each of the two energy storage devices and the second switch module corresponding to the direct current bus of the charging device.

5. The charging system according to claim 3 or 4, wherein
when the charging device and the other charging device each charge the load, in response to the output power of the charging device and output power of the other charging device being less than the required charging power of the load, the at least one first switch module is configured to: connect a part of energy storage devices in the plurality of energy storage devices and the second switch module corresponding to the direct current bus of the charging device, and connect the other part of energy storage devices and a second switch module corresponding to a direct current bus of the other charging device.

6. The charging system according to claim 5, wherein
when a difference between the output power of the charging device and the required charging power of the load is greater than a difference between the output power of the other charging device and the required charging power of the load, an average value of SOCs of the part of energy storage devices is greater than an average value of SOCs of the other part of energy storage devices.

7. A charging method, wherein the charging method comprises:
when a charging device in a charging system charges a load, obtaining required charging power of the load; and
in response to output power of the charging device being less than the required charging power of the load, controlling at least one switch module in the charging system to connect a plurality of energy storage devices in the charging system and a direct current bus of the charging device, wherein the direct current bus of the charging device is configured to aggregate direct currents output by alternating current-to-direct current AC-DC conversion apparatuses in the charging device, and output an aggregated direct current to the load through a direct current-to-direct current DC-DC conversion apparatus.

8. The charging method according to claim 7, wherein controlling the at least one switch module in the charging system to connect the plurality of energy storage devices and the direct current bus of the charging device comprises:
controlling at least one first switch module to connect the plurality of energy storage devices and a second switch module corresponding to the direct current bus of the charging device, and controlling the second switch module corresponding to the direct current bus of the charging device to connect the direct current bus of the charging device and the energy storage devices that are connected through the at least one first switch module, wherein the at least one first switch module and the second switch module corresponding to the direct current bus of the charging device belong to the at least one switch module.

9. The charging method according to claim 8, wherein controlling the at least one first switch module to connect the plurality of energy storage devices and the second switch module corresponding to the direct current bus of the charging device comprises:
in response to a difference between states of charge SOCs of two of the plurality of energy storage devices being greater than a preset SOC difference, controlling the at least one first switch module to connect an energy storage device with a higher SOC in the two energy storage devices and the second switch module corresponding to the direct current bus of the charging device; or
in response to a difference between states of charge SOCs of two of the energy storage devices being less than or equal to the preset SOC difference, controlling the at least one first switch module to connect each of the two energy storage devices and the second switch module corresponding to the direct current bus of the charging device.

10. The charging method according to claims 8 and 9, wherein the charging method further comprises:
when the charging device and the other charging device in the charging system each charge the load, in response to the output power of the charging device and output power of the other charging device being less than output power of the load, controlling the at least one first switch module to connect a part of energy storage devices in the plurality of energy storage devices and the second switch module corresponding to the direct current bus of the charging device, and connect the other part of energy storage devices and a second switch module corresponding to a direct current bus of the other charging device.

11. The charging method according to claim 10, wherein when a difference between the output power of the charging device and the required charging power of the load is greater than a difference between the output power of the other charging device and the required charging power of the load, an average value of SOCs of the part of energy storage devices is greater than an average value of SOCs of the other part of energy storage devices.
